# EUROPEAN PATENT APPLICATION

(11) **EP 1 002 681 A2**
(43) Date of publication of application: **24.05.2000**
(21) Application number: 99123102.8
(22) Date of filing: 18.11.1999
(51) Int. Cl.: B60J 11/00

(54) **Apparatus for protecting vehicles, particularly against hail**

(30) Priority: 19.11.1998 IT PD980273
(71) Applicant: Bruson, Simone, 35010 Vigonza (Prov. of Padova) (IT)
(72) Inventor: Bruson, Simone, 35010 Vigonza (Prov. of Padova) (IT)
(74) Representative: Modiano, Guido, Dr.-Ing.

(57) **Abstract**

A vehicle protection apparatus, particularly for protection against hail, comprising a sheet (15) whose dimensions are such that it can be spread out so as to cover at least the hood, trunk and roof of a car. The sheet has a plurality of tubular seats (18) in which longitudinally elongated elements (20) are inserted; the elements are suitable to keep the lower part of the sheet properly spread and raised from the car body and at the same time absorb the impacts produced by hail and similar conditions. The sheet is provided with means (22) for anchoring to lower parts of the body of the car which are suitable to fasten it onto the car.

## Description

The present invention relates to an apparatus for protecting vehicles, particularly in case of hail or bad weather.

It is in fact known that many vehicles, and cars in particular, cannot always be parked so as to be protected from the weather under a shelter or covered area.

The greatest danger occurs during the warm season and particularly in the hottest periods, when sudden weather changes can occur, followed by sudden storms with hail precipitation, which can cause even severe damage to the body of cars.

Currently there is no real solution to the problem; indeed, in the rare cases in which the owner of the vehicle is fortunately in the direct vicinity of said vehicle, all he can do is run to place a woolen blanket, if he has one available, on his car, so that the blanket at least partially cushions the impacts of the hailstones.

However, the problem is felt particularly by car dealers and car showroom owners, because they put on display for sale several cars which are usually located outdoors and because in case of a violent hailstorm they cannot shelter them from the inclemency of the weather.

Car dealers in fact rarely have garages and/or shelters for all the cars, some of which usually remain outdoors at all times, at the mercy of the weather.

Actually, an apparatus for protection against hail is known and disclosed in industrial invention patent no. 1247258; said apparatus is substantially constituted by a sheet made of plastics, whose dimensions are such as to cover at least the hood, roof, windshield and rear window of the car.

Said sheet is perimetrically provided with a certain number of supports of the pin and sucker type, which are fixed onto the body and keep said sheet raised and properly taut on top of it.

The apparatus briefly described, however, has not been successful, mostly due to the difficult operation of placing the supports on the body so that the sheet remains well taut on top of it, which must be as quick as possible when a summer storm occurs.

Another troublesome drawback is certainly due to the fact that sudden hailstorms are usually accompanied by thunderstorms and by wind, which can very easily detach the sucker-type supports from the car body and even blow away the sheet when the wind is very strong.

Accordingly, the above-described apparatus is highly inadequate in terms of safety.

Additionally, the action of the sun on car body paints also is not negligible. It would in fact be better to protect the car from the direct action of sun rays.

The aim of the present invention is to provide a vehicle protection apparatus which in particular can protect said vehicle against hail in an extremely effective manner.

Within the scope of this aim, an important object of the present invention is to provide an apparatus which can be arranged in the active configuration, so as to cover the body of a car, in a practical way and most of all quickly.

Another object of the present invention is to provide an apparatus which ensures characteristics of great strength and durability.

Another important object of the present invention is to provide a vehicle protection apparatus which can be manufactured very simply and at very low cost.

Another object of the present invention is to provide an apparatus which is capable of protecting cars from the weather and especially when particularly violent hailstorms occur.

Another object of the present invention is to provide a vehicle protection apparatus which can be manufactured in practice by using per se known equipment and systems.

Another object of the present invention is to provide an apparatus which solves all the drawbacks mentioned above and at the same time can be stored in a limited space of the trunk, so as to be always available for use.

This aim, these objects and others which will become apparent hereinafter are achieved by a vehicle protection apparatus, particularly for protection against hail, characterized in that it comprises a sheet whose dimensions are such that it can be spread out so as to cover at least the hood, trunk and roof of a car, said sheet having a plurality of tubular seats in which longitudinally elongated elements are inserted, said elements being suitable to keep the lower part of said sheet properly spread and raised from the car body and at the same time suitable to absorb the impacts produced by hail or similar conditions, said sheet being provided with means for anchoring to lower parts of the body of said car, said means being suitable to fasten it onto said car.

Further characteristics and advantages of the present invention will become apparent from the following detailed description of an embodiment thereof, illustrated only by way of non-limitative example in the accompanying drawings, wherein:

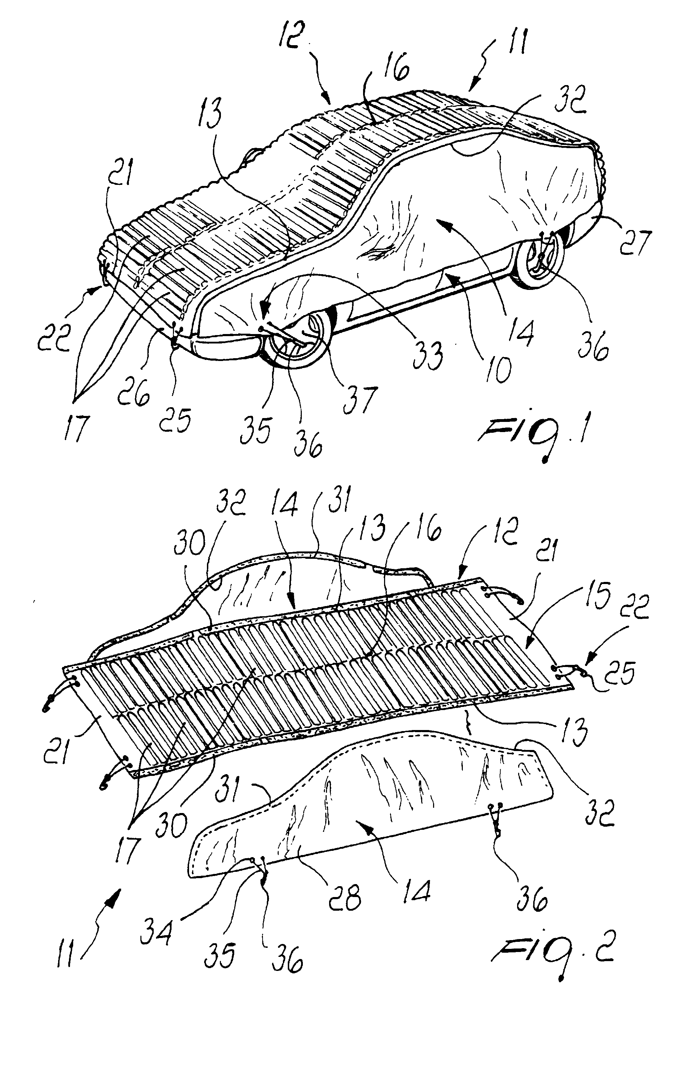

Figure 1 is a perspective view of a car provided with a protection apparatus according to the present invention;
Figure 2 is an exploded view of the protection apparatus shown in Figure 1;
Figure 3 is a perspective view of a detail of the apparatus of Figures 1 and 2;
Figure 4 is a longitudinal sectional view of the detail shown in Figure 3;
Figure 5 is a sectional view, taken along a transverse plane, of a detail of the apparatus of Figure 1.

With reference to the above figures, a protection apparatus, generally designated by the reference numeral 11, is arranged on a car, designated by the reference numeral 10.

Said apparatus 11 comprises, in this configuration, a rectangular central part 12 which covers the hood and trunk, the windshield, the roof and the rear window of the car 10.

A lateral part 14, meant to protect the corresponding side of the car 10, is joined, in a manner described more clearly hereinafter, at each one of the two longer sides 13 of the central part 12.

Said central part 12 is constituted by a double sheet 15 which has a rectangular shape whose dimensions substantially correspond, as regards the width, to the transverse profile of the car 10 and, as regards the length, to the longitudinal profile that runs from the headlights along the line of the hood, of the windscreen, of the roof, of the rear window, to the rear lights of said car 10.

Said sheet 15 is made, in this case, of soft plastics (i.e., plastics capable of adapting to the profile of the car 10), but it can also be conveniently made of non-woven fabric or of other materials having equal technical characteristics.

On the sheet 15, which is double, there is a main heat-bonded seam 16 for joining the two parts; said seam runs longitudinally and lies substantially at the centerline region.

Secondary heat-bonded seams 17 are formed on said sheet 15 and run in particular transversely between the main heat-bonded seam 16 and each one of the two longitudinal sides 13, so that they are all parallel and mutually equidistant.

Said secondary heat-bonded seams 17 form, when considered in pairs, a plurality of tubular seats 18 which can be directly accessed from outside at the longitudinal sides 13 of the sheet 15.

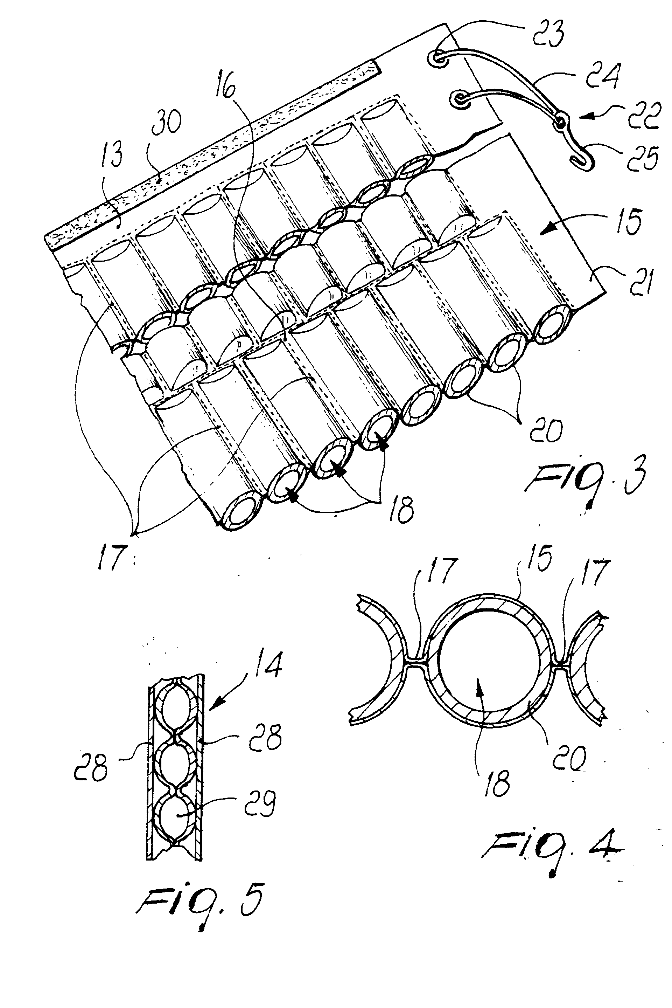

It is particularly important to note that the secondary heat-bonded seams 17 of each one of the two halves of the sheet 15 formed by the main heat-bonded seam 16 are not perfectly aligned but are instead conveniently staggered, as shown in Figure 3 and as explained in detail hereinafter.

A longitudinally elongated element is conveniently inserted in each one of said seats 18 and its dimensions are such that in practice it fills said seat 18 substantially completely.

In this case, each one of said longitudinally elongated elements is constituted by a tubular body 20 which has a circular cross-section and is also made of plastics or, as an alternative, of a material having equal characteristics.

In other cases, said longitudinally elongated elements can be tubes having a rectangular cross-section or solid bodies.

Preferably, the plastic material used to manufacture the sheet 15 and said longitudinally elongated elements is polyurethane, polystyrene, polyethylene, PVC-rubber or, as an alternative, a material known commercially by the trademark Nylon.

As an alternative to said tubular bodies, it is possible to use longitudinally elongated bodies which have a solid polygonal or circular cross-section.

Clearly, depending on the type of material used to produce said sheet 15, for example when using a fabric or a non-woven fabric, it is possible to perform stitched seams instead of the heat-bonded seams 16 and 17.

In this particular embodiment, at the ends of the sheet 15, at the transverse sides 21, there are anchoring means generally designated by the reference numeral 22.

In this case, said anchoring means 22 are constituted by eyelets 23 through each of which a tensioning cord 24 passes which ends with a hook 25.

Each one of said hooks 25 can be fixed to the lower part of the body of the car 10, for example at the edges of the front bumper 26 and of the rear bumper 27.

The tensioning cord 24 can of course also be replaced by elastic elements made of rubber or by other elements having equal characteristics.

Said apparatus 11 is completed, as mentioned, by two lateral parts 14 which are suitable to protect the sides of the car 10.

In this case, each one of said lateral parts 14 is constituted by a sandwich-type composite obtained by interposing between two sheets of plastics 28 which are shaped like the profile of the corresponding side of the car 10 a polythene sheet 29 provided with air-filled pockets, of the per se known type used normally in packaging, as shown in Figure 5.

A first strip 30 of a self-locking fixing component, of the type known commercially by the trademark Velcro, is fixed along each one of the two longitudinal sides 13 of the central part 12 to which the two lateral parts 14 are to be fixed.

Correspondingly, a second strip 31 is fixed along the edge 32 of each one of the two lateral parts 14 on the side meant to be joined to the central part 12.

Each one of said first strips 30 is constituted by a tape provided with eyelets, whereas each one of said second strips 31 is constituted by a tape which has the same dimensions and is provided with hooks.

Said first and second strips 30 and 31 firmly fix to each other by simple pressing, by means of which the hooks engage the eyelets, whereas subsequent uncoupling occurs by simple tearing.

In this case, each one of said lateral parts 14 too has anchoring means 33 which are constituted, as in the preceding case, by eyelets 34 which are formed in the perimetric regions and are crossed by tensioning cords 35 which end with hooks 36 which can engage, for example, the wheel well 37 of the car 10.

It is interesting to note that the described protective apparatus 11 can be easily stored in the trunk of the car 10, since its two lateral parts 14 easily detach from the central part 12 and can be folded.

Likewise, the presence of the main heat-bonded seam 16 and the mutual staggering of the secondary heat-bonded seams 17, by means of which the tubular bodies 20 are correspondingly staggered, allows to fold the main part 12 first in half along said main heat-bonded seam 16 and then allows successive folding operations which allow to place the main part 12 in the trunk.

In this embodiment, said main heat-bonded seam 16 and each one of said secondary heat-bonded seams preferably reach a width of substantially 4-5 mm.

The distance between each one of said secondary heat-bonded seams 17 is furthermore preferably equal to 38 mm, whereas each one of said tubular bodies 20 has an outside diameter which is substantially equal to 21-22 mm and a thickness of 2 mm.

As an alternative to the use of said Velcro strips 30 and 31, it is possible to use other means, for example press-studs or zip fasteners, to join the central part 12 and the lateral parts 14.

In practice it has been observed that the described protective apparatus according to the present invention has fully achieved the aim and all the intended objects.

A considerable advantage is due to the fact that an apparatus has been provided which can be easily placed over the body of the car and can just as easily be removed and stored in the trunk of the car.

It is particularly worth noting that the sheet 15 of the central part 12 is substantially kept raised from the car 10 and the tubular bodies 20 are meant to cushion the possibly violent blows inflicted by a sudden hailstorm.

The regions most heavily struck and damaged by hail are in fact the hood and the roof, but particularly violent blows can even crack and/or break the windshield, the rear window and the front and/or rear lights.

The sides of the car are instead always less intensely hit and are therefore more than adequately protected by the lateral parts 14, especially thanks to the presence of the polythene sheet 29 with air-filled pockets.

The described apparatus 11 can in any case also be used to protect the paint of the car body from the direct action of sun rays.

It is also important to note that the described apparatus 11 can be used effectively to protect greenhouses, conservatories and the like against hail impacts.

Another advantage achieved with the present invention is that an apparatus is provided which can be arranged over the body of a motor vehicle so as to cover it rapidly and by performing simple operations which are easy to perform.

Another advantage that is achieved is due to the fact that an apparatus has been provided which is capable of ensuring characteristics of great resistance and long durability.

The described apparatus can also be manufactured very simply and with a very low cost.

The fact should also be noted that said apparatus assuredly provides the vehicles on which it is fitted with an extremely effective protection, especially when particularly violent hailstorms occur.

A feature worth noting again is due to the fact that the described apparatus can be stored in a small space of the trunk, so as to be always ready for use.

The invention thus conceived is susceptible of numerous modifications and variations, all of which are within the scope of the same inventive concept.

In particular, a second configuration of a hail protection apparatus has no main heat-bonded seam but is constituted by a single piece.

All the details may be replaced with other technically equivalent elements.

In practice, the materials employed, so long as they are compatible with the contingent use, as well as the dimensions, may be any according to requirements.

The disclosures in Italian Patent Application No. PD98A000273 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A vehicle protection apparatus, particularly for protection against hail, characterized in that it comprises a sheet whose dimensions are such that it can be spread out so as to cover at least the hood, trunk and roof of a car, said sheet having a plurality of tubular seats in which longitudinally elongated elements are inserted, said elements being suitable to keep the lower part of said sheet properly spread and raised from the car body and at the same time being suitable to absorb the impacts produced by hail or similar conditions, said sheet being provided with means for anchoring to lower parts of the body of said car, said means being suitable to fasten it onto said car.

2. The apparatus according to claim 1, characterized in that said sheet is double and bears lines that join the two parts and form, in pairs, said tubular seats.

3. The apparatus according to claim 2, characterized in that on said sheet there is a main joining line which runs longitudinally at the centerline region and there are a plurality of secondary joining lines which form, in pairs, said tubular seats, said secondary joining lines running transversely between said main joining line and each one of the two longitudinal sides of said sheet so that they are all parallel and equidistant.

4. The apparatus according to claim 3, characterized in that each one of said longitudinally elongated elements is constituted by a tubular body.

5. The apparatus according to claim 4, characterized in that each one of said tubular bodies has a circular cross-section.

6. The apparatus according to claim 4, characterized in that each one of said tubular bodies has a rectangular cross-section.

7. The apparatus according to one or more of the preceding claims. characterized in that each one of said longitudinally elongated elements has such dimensions as to fill substantially completely the tubular seat in which it is inserted.

8. The apparatus according to one or more of the preceding claims, characterized in that said sheet is made of soft plastics.

9. The apparatus according to claim 8, characterized in that said sheet is made of one of the following materials: polyurethane, polystyrene, polyethylene, PVC-rubber, material known commercially by the trademark Nylon or other material having equal characteristics.

10. The apparatus according to claims 3 and 9, characterized in that said joining lines are thermal bonding lines formed on said sheet.

11. The apparatus according to one or more of the preceding claims 1 to 7, characterized in that said sheet is made of fabric or non-woven fabric.

12. The apparatus according to claims 3 and 11, characterized in that said joining lines are stitched seams formed on said sheet.

13. The apparatus according to claim 1 and/or 2 to 12, characterized in that said longitudinally elongated elements are made of at least one of the following materials: polyurethane, polystyrene, polyethylene, PVC-rubber, material known commercially by the trademark Nylon, or another material having equal characteristics.

14. The apparatus according to claim 3, characterized in that said secondary joining lines of a first half of said sheet are staggered with respect to the corresponding secondary joining lines of the second half of said sheet.

15. The apparatus according to claim 1, characterized in that said anchoring means are constituted by eyelets formed perimetrically on said sheet, each one of said eyelets being crossed by a tensioning cord which ends with a hook which can be fixed in the lower part of the car body.

16. The apparatus according to one or more of the preceding claims, characterized in that it comprises two lateral parts which are suitable to protect the sides of said vehicle, each one of said lateral parts being constituted by interposing between two shaped sheets a layer of insulating material which is suitable to absorb the impacts of hail.

17. The apparatus according to claim 16, characterized in that said sheets of each lateral part are made of plastics and said intermediate layer is a sheet of polythene with air-filled pockets.

18. The apparatus according to claim 17, characterized in that each lateral part is detachable.

19. The apparatus according to claim 18, characterized in that a strip of a self-locking fixing component of the type commercially known by the trademark Velcro is fixed along each one of the longitudinal sides of the sheet that covers the trunk, hood and roof and along the corresponding edge of each lateral part.

20. The apparatus according to claims 16 and/or 17 to 19, characterized in that each one of said lateral parts is provided with means for anchoring to the lower parts of the vehicle body.
